# EUROPEAN PATENT SPECIFICATION

(11) **EP 1 239 466 B1**
(45) Date of publication and mention of the grant of the patent: **21.12.2005**
(21) Application number: 01304638.8
(22) Date of filing: 25.05.2001
(51) Int. Cl.: G11B 23/50

(54) **Disk cartridge and disk recording / reproducing apparatus**
Plattenkassette und Plattenaufzeichnungs- und/oder Wiedergabegerät
Cartouche de disque et appareil d'enregistrement et/ou de reproduction de disque

(30) Priority: 22.02.2001 KR 2001008997
(43) Date of publication of application: 11.09.2002
(73) Proprietor: SAMSUNG ELECTRONICS CO., LTD., Suwon-City, Kyungki-do (KR)
(72) Inventor: Choi, Un-jin, Paldal-gu Suwon-si Gyeonggi-do 442-380 (KR); Hong, Soon-kyo, Seocho-gu, Seoul (KR); Bae, Byoung-young, Songtanjiyeok Pyeongtak-si, Gyeonggi-do (KR); Lee, Sung-jin, Suwon-si, Gyeonggi-do (KR)
(74) Representative: Robinson, Ian Michael

(56) References cited:
- EP-A- 0 351 178
- EP-A- 1 033 716
- US-A- 3 839 734
- US-A- 3 893 185
- PATENT ABSTRACTS OF JAPAN vol. 016, no. 454 (P-1425), 21 September 1992 (1992-09-21) & JP 04 159676 A (RICOH CO LTD), 2 June 1992 (1992-06-02)
- PATENT ABSTRACTS OF JAPAN vol. 014, no. 422 (P-1104), 12 September 1990 (1990-09-12) & JP 02 162563 A (VICTOR CO OF JAPAN LTD), 22 June 1990 (1990-06-22)
- PATENT ABSTRACTS OF JAPAN vol. 015, no. 251 (P-1220), 26 June 1991 (1991-06-26) & JP 03 080489 A (NEC CORP), 5 April 1991 (1991-04-05)

## Description

The present invention relates to a disk cartridge and a disk recording reproducing apparatus, and more particularly, to a disk cartridge and a disk recording reproducing apparatus which are designed to effectively remove foreign materials from the surface of a disk.

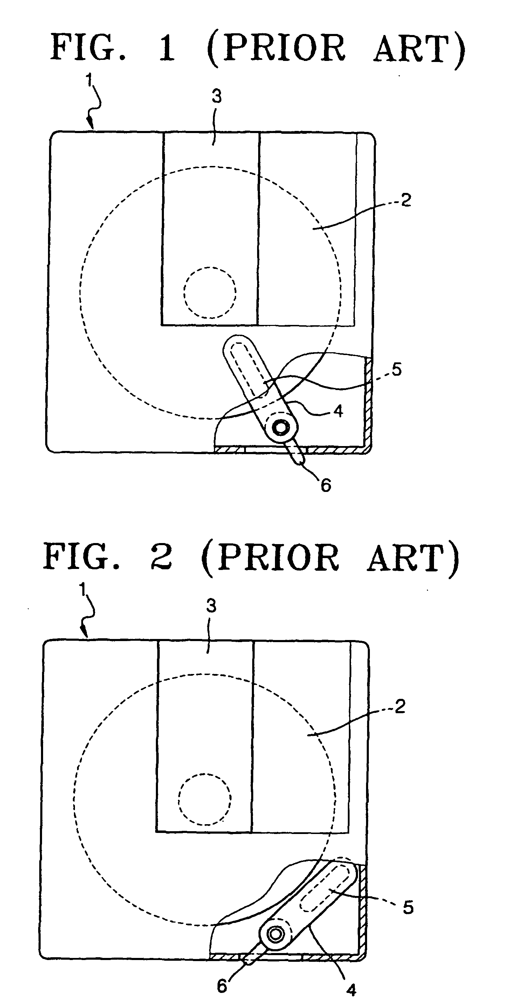

As shown in Figure 1, a typical disk cartridge 1 for housing a disk 2 such as an optical disk or a magnetic disk has a shutter 3 slidably installed at one side of the disk cartridge, such that a disk recording/reproducing apparatus can record data to and reproduce data from the disk 2 by accessing the disk using its header (not shown) while selectively opening or closing the shutter 3.

A problem arises in that a foreign material such as fine dust on the surface of the disk 2 is very likely to cause serious errors during recording and reproduction of information. Also, in the case of a disk 2 that is not housed in a cartridge 1 and has a protective layer formed on the disk, a foreign material attached on the surface of the disk is high likely to cause errors during recording and reproduction. However, particularly, the disk 2, which is housed in the cartridge 1 without protective layers, has a greater possibility that errors are generated due to attachment of a foreign material to the surface of the disk.

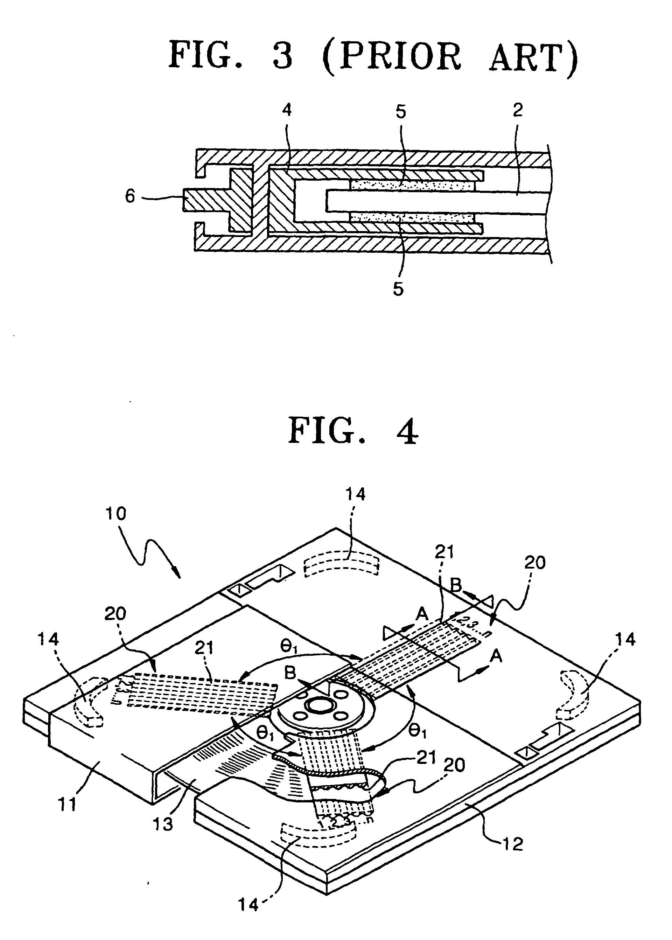

In order to reduce the possibility of generating errors, in the prior art, a cleaning apparatus as shown in Figures 1 through 3 is installed in the cartridge 1 to remove a foreign material from the surface of the disk 2. The cleaning apparatus includes a support arm 4 rotatably installed in the cartridge 1, a cleaning member 5 located on the support arm 4 so as to contact the surface of the disk 2, and a lever 6 protruding outside the cartridge 1 so that a user may rotate the support arm 4. Thus, upon cleaning, as shown in Figures 1 and 3, the support arm 4 passes over the disk 2 so that the cleaning member 5 contact the disk 2, and then the disk 2 rotates, thus removing a foreign material from the surface of the disk 2. Upon recording/reproducing, as shown in Figure 2, the support arm 4 is moved in the opposite direction so that the cleaning member 5 does not disturb the disk 2.

In the above-described prior-art disk cartridge, a separate cleaning apparatus must be installed in the cartridge 1, so that the number of component parts increases, manufacturing time increases, and also the thickness of the cartridge 1 increases. Thus, the conventional disk cartridge is disadvantageous where it is desired to slim a disk recording/reproducing apparatus. Also, in the case of disks having no protective layers formed thereon, the conventional disk cartridge can cause a serious error to the disk 2 when the cleaning member 5 directly contacts the surface of the disk 2.

Therefore, a disk cartridge capable of removing foreign materials from the surface of a disk in a noncontact manner while protecting the surface of the disk is required.

JP-A-02162563 discloses a disk cartridge having a liner having fibres which contact the surface of the disk and remove dust from the disk at it rotates.

JP-A-0308489 discloses a disk cartridge having a cleaning part including a brush which is in contact with the recording face of the optical disk until the rotational frequency of the disk reaches a certain level and the brush floats over the surface of the disk.

US-A-3893185 discloses a head assembly for transducing signals between a head and a recording medium, the assembly including a mechanically biased pad for pressing the medium against the head. Air is provided to the head to reduce the friction force, and thus the wear, between the head and the medium. This air flow also provides the head with self-cleaning characteristics.

US-A-3839734 discloses a disk cartridge utilising the air flow generated by motion of the disk during use for maintaining the cleanliness of the disk surface. The cartridge is provided with a number of blades spaced from the disk surface. The air incident against each deflector blade is deflected against the disk surface and passes between the deflector blade and the disk surface to sweep particles from the disk surface.

JP-A-04159676 discloses a disk cartridge having V-shaped grooves on the upper and lower walls of a case and extending radially from a disk centre towards the disk surface. As the disk rotates, air flow is generated on its surface for cleaning purposes. This document forms the pre-characterising portion of independent claim 1 appended hereto.

An aim of the present invention is to provide a disk cartridge and a disk recording/reproducing apparatus which are improved to remove foreign materials from the surface of a disk.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figures 1 through 3 are plan views of a conventional disk cartridge including a separate disk cleaning apparatus;
Figure 4 is a perspective view of a disk cartridge according to a first embodiment of the present invention;
Figures 5A and 6 are cross-sections of the disk cartridge of Figure 4 taken long line A-A, for illustrating the effects that flowing of air during disk rotation under the structure of a protrusion group exerts on the surface of a disk;
Figure 5B is a cross-section of the disk cartridge of Figure 4 taken along line B-B; Figures 7A through 8 show variations in pressure and flow velocity depending on the flow of air during rotation of a disk;
Figures 9 and 10 show modified shapes of the protrusion group shown in Figure 4;
Figures 11 and 12 show modified arrangements of the protrusion group shown in Figure 4;
Figure 13A is a plan view of a disk cartridge according to a second embodiment of the present invention;
Figure 13B shows a modification of the disk cartridge of Figure 13A;
Figure 14A is a plan view of a disk cartridge according to a third embodiment of the present invention;
Figure 14B shows a modification of the disk cartridge of Figure 14A;
Figure 15 is a perspective view of a disk cartridge according to a fourth embodiment of the present invention;
Figure 16A is a plan view of a disk recording/reproducing apparatus according to a first embodiment of the present invention;
Figure 16B shows a modification of the disk recording/reproducing apparatus of Figure 16A; and
Figure 17 is a perspective view of a disk recording/reproducing apparatus according to a second embodiment of the present invention.

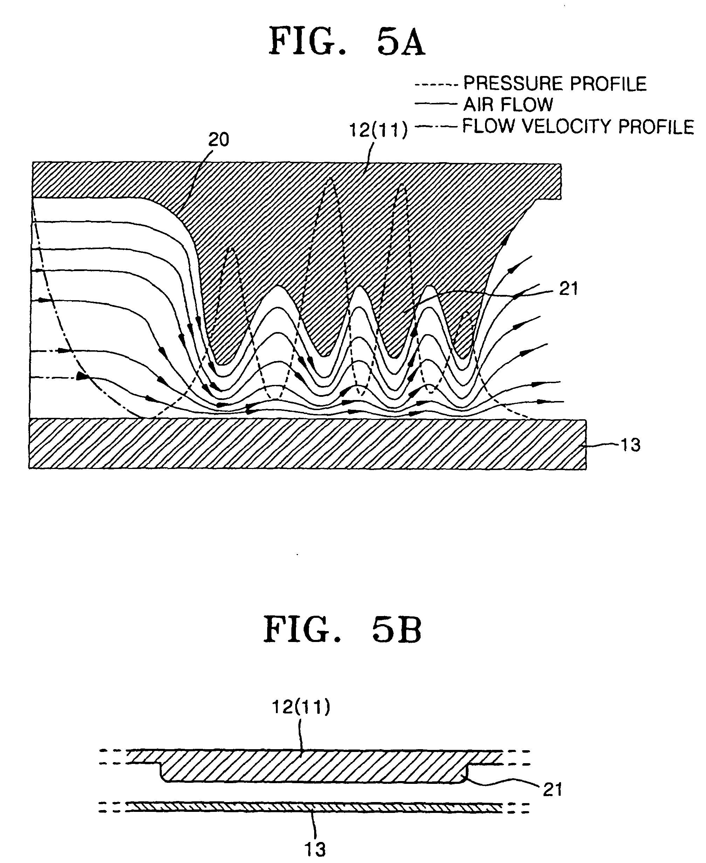

Referring to Figure 4, a disk cartridge 10 according to a first embodiment of the present invention includes a case 12 for housing a disk 13, a shutter 11 installed on the case 12 so that it is opened and closed to accomplish an access of the disk 13 to a recording/reproducing apparatus, and foreign material filters 14. A protrusion group 20 having a plurality of protrusions 21 (first, second, third, .... , and n-th protrusions) protruding toward the disk 13 is formed on the inner wall of the case 12 or on the inner wall of the shutter 11. As shown in Figures 4 and 5B, the protrusions 21 lie in the radial direction of the disk 13, and the protrusion group 20 having the protrusions 21 are disposed at a plurality of places at an equiangular interval in the direction of rotation of the disk 13. The protrusion group 20 induces a flow of air caused during the rotation of the disk 13 to serve as a force to remove foreign materials from the surface of the disk 13. The protrusion group 20 is formed on each of the opposing upper and lower inner walls of the case 12 to apply a force to each of the upper and lower surfaces of the disk 13. The protrusion group 20 can be incorporated into the inner wall of the case 12 or shutter 11. Alternatively, the protrusion group 20 is separately manufactured and then coupled to the inner wall of the case 12 or shutter 11 by an attachment process.

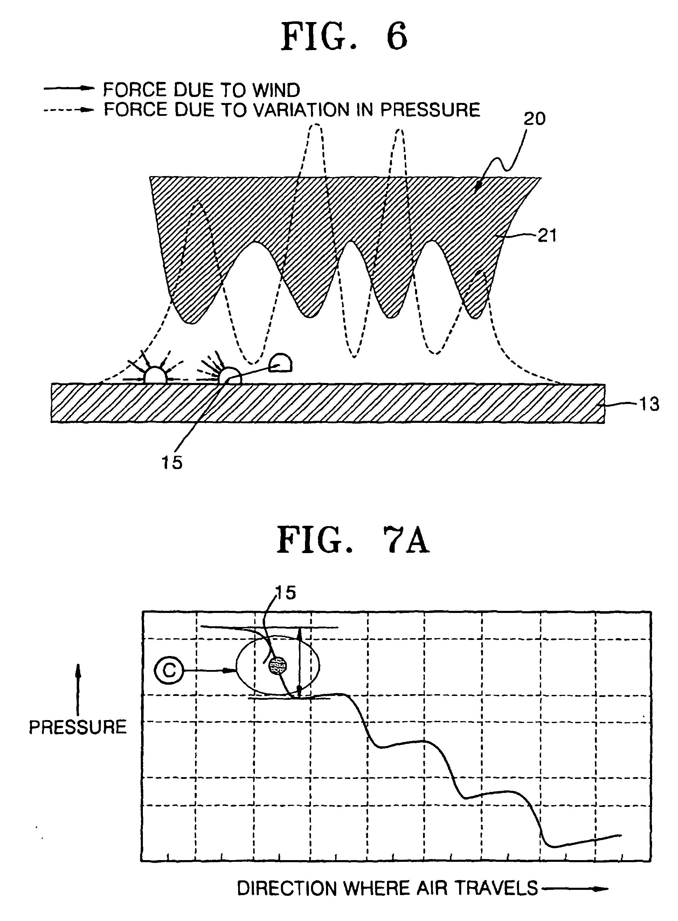

Figures 5A and 6 are cross-sections of the disk cartridge of Figure 4 taken along line A-A, which theoretically illustrate the principle that flowing of air caused during the rotation of the disk 13 exerts a predetermined force on the surface of the disk by the protrusions 21.

Referring to Figure 5A, airflow generated by rotation of the disk 13 repeats compression and expansion while passing between the protrusions 21 of the protrusion group 20 and the disk 13. Thus, a pressure profile as indicated in a dotted line is formed on the disk 13, and the flow velocity of air becomes faster as air becomes closer to the surface of the disk 13, as indicated in a one-dot-one-dashed line.

Under this environment, if a foreign material 15 is attached to the surface of the disk 13 as shown in Figure 6, a force due to the flow of air (which is indicated in a solid line) and a force due to a variation in pressure (which is indicated in a dotted line) are exerted on the foreign material 15. Theoretically, at the side where the pressure increases, a force due to the pressure is exerted in the opposite direction to the direction in which a force due to the flow of air is exerted. At the side where the pressure decreases, the two forces exert in the same direction. The influence of the force generated by the flow of air is greater than that of the force generated by the variation in pressure, so that a drag force is exerted at any position in the direction of detaching foreign material from the surface of the disk 13. However, summing of the two forces can accelerate the removal of the foreign materials.

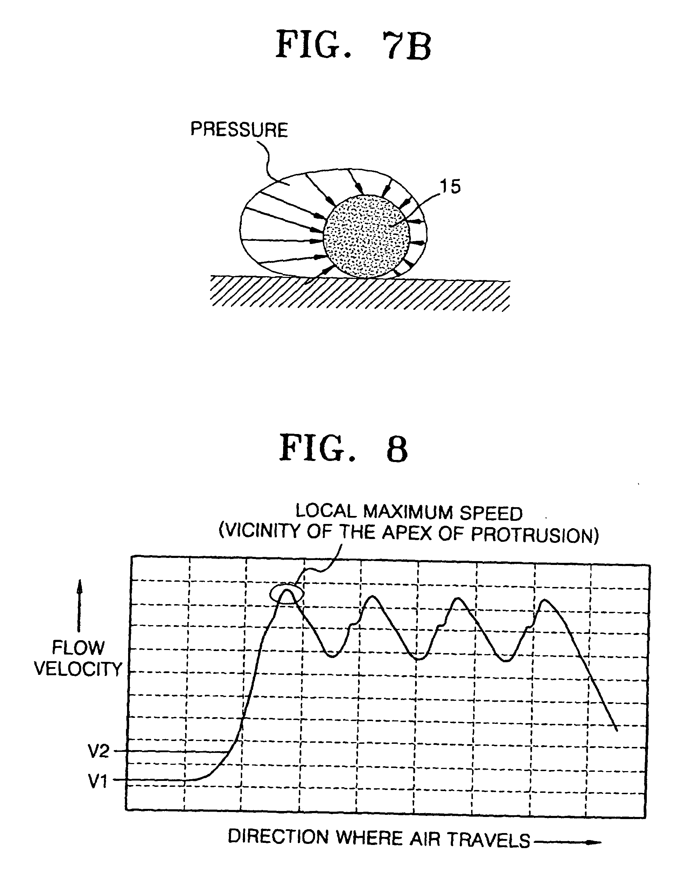

The result of simulation of a pressure distribution formed around the protrusions as the disk 13 actually rotates is closer to what is shown in Figure 7A than to what is shown in Figures 5A and 6. That is, theoretically, air passing under the protrusions 21 alternates compression and expansion as shown in Figures 5A and 6. However, actually, air introduced under the protrusion group 20 is rapidly compressed at first and thus applies a great pressure to the disk 13. Then, while the compression of air decreases in stages without any distinct increase in pressure, air slips out of the place under the protrusion group 20. Accordingly, there are rarely pressure increasing regions between the disk 13 and the protrusion group 20, but regions where the pressure decreases in stages are usually formed between the disk 13 and the protrusion group 20. Thus, if there is a foreign material 15 at position C in Figure 7A, a greater pressure is applied to the left side of the foreign material 15 than to the right side thereof as shown in Figure 7B. Therefore, the foreign material 15 is pushed to the right side and detached from the surface of the disk 13.

A force generated by the flow of air is also exerted in the above-described foreign material detaching process. The force generated by the flow of air occurring during the rotation of the disk 13 is proportional to the flow velocity of air. As a result of simulation, the distribution of the flow velocity of air is formed as shown in Figure 8. The result of simulation is almost consistent with the theoretical tendency shown in Figures 5A, 5B and 6. That is, Figure 8 shows a pattern in which the velocity of air gradually increases while air is being compressed by the protrusions 21, reaches the summit around the apex of each of the protrusions 21 and then decreases a little. However, when the rotation velocity of the disk 13 is referred to as V1, if there are no protrusions 21, the flow velocity of air is a level (initial inflow velocity V2) which is similar to V1. However, it can be seen that, if there are protrusions 21, the flow velocity of air greatly increases on the entire surface of the disk 13 as air is compressed by the protrusions 21.

Hence, when the disk cartridge 10 has a protrusion group 20 formed on the inner wall of the case 12 or shutter 11, it can sufficiently remove foreign materials from the surface of the disk 13 using the flow of air and the difference in pressure generated during the rotation of the disk.

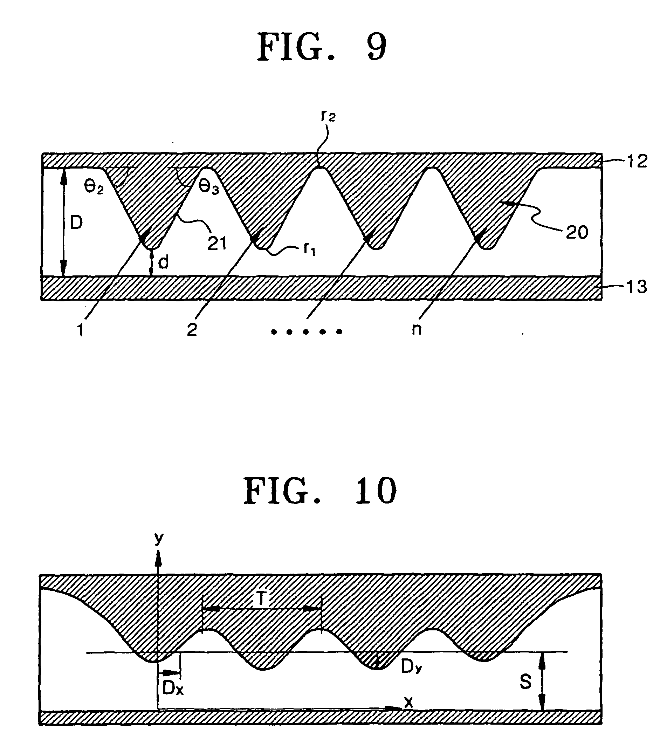

The protrusion group 20 can be made up of variously-shaped protrusions 21 as shown in Figures 9 and 10. Figure 9 shows that n protrusions 21 can have a variety of periodically-repeated shapes obtained by varying a plurality of variables. That is, a protrusion group 20 of Figure 9 can be obtained by adjusting variables such as the distance (D) between the inner wall of the case 12 and the disk 13, the protrusion angles θ2 and θ3 of a protrusion 21, the distance (d) between the apex of a protrusion and the disk 13, and the round values r1 and r2 of each protrusion. Alternatively, as shown in Figure 10, a protrusion group having a shape of a sine curve can be formed. This sine curve shape can be expressed as a sine function: y=Dy x Sin {(2Π/T) · x - Dx} + S.

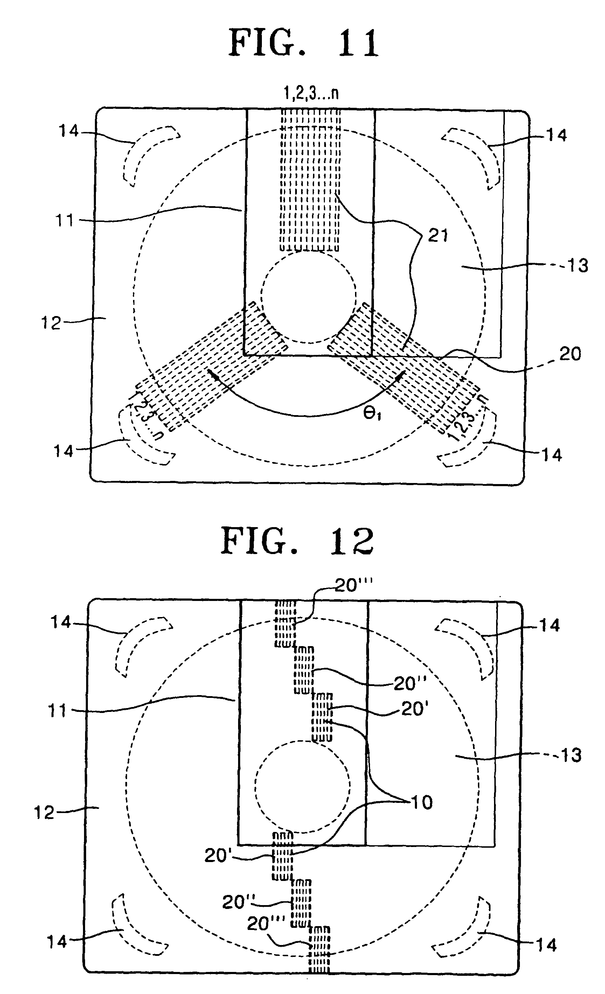

The protrusion group 20 can be linearly disposed in the radial direction of the disk 13 as shown in Figures 4 and 11. Alternatively, as shown in Figure 12, the protrusion group 20 is divided into several parts, and the parts are arranged in a stepped manner. The arrangement of divided protrusion groups 20', 20" and 20"' as shown in Figure 12 in a stepped manner allows foreign materials detached from the surface of the disk 13 to more smoothly slip out of the protrusion groups 20', 20" and 20"'. That is, when the protrusion group 20 is disposed in a straight line as shown in Figure 11, foreign materials detached from the surface of the disk 13 must slip out of many protrusions 21. However, when the protrusion group 20 is partitioned into several parts and the parts are arranged in a stepped manner, the foreign materials detached from the surface of the disk 13 slip out of relatively fewer protrusions 21 than the above case, so that the foreign materials can easily slip out of the protrusions.

According to the present invention, when protrusions 21 are formed toward the disk 13 on the inner wall of the case 12 or shutter 11 of the disk cartridge 10, foreign materials can be effectively removed from the surface of the disk without a complicated cleaning apparatus.

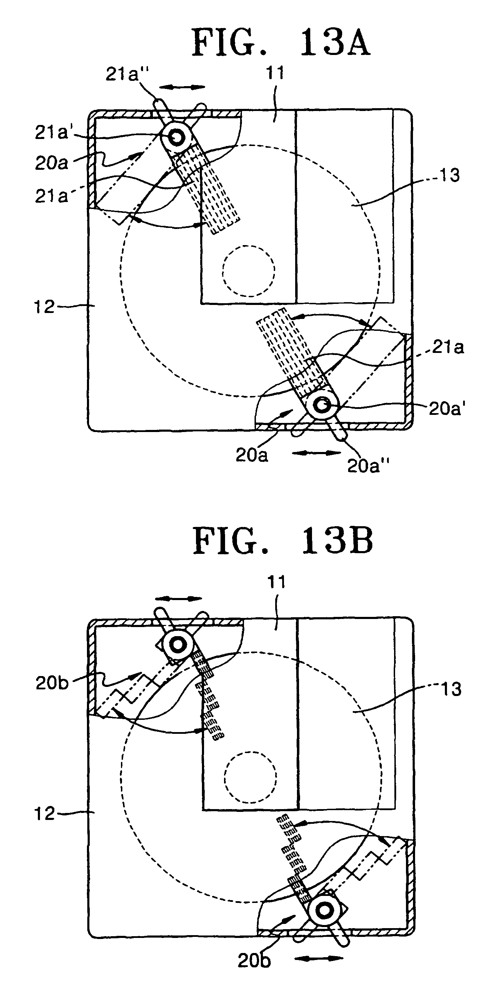

Figure 13A is a plan view of a disk cartridge according to a second embodiment of the present invention. The principle of removing foreign materials in this embodiment is the same as the above-described first embodiment. However, in the second embodiment, a protrusion group 20a is not incorporated into or attached to the inner wall of the case 12 but installed as a separate member, which rotates around a rotation axis 20a', so that its position is selected according to mode. That is, the protrusion group 20a is installed so as to rotate around the rotation axis 20a' installed in the case 12, and a lever 20a" is installed so as to protrude outside the case 12. Thus, in a cleaning mode, the lever 20a" is turned so that the protrusion group 20a is located over and under the disk 13. In a normal mode, the lever 20a" is turned reversely to the cleaning mode so that the protrusion group 20a is substantially clear of the disk 13. Accordingly, in a cleaning mode, the protrusion group 20a is located over and under the disk, so that the same cleaning effect as that in the first embodiment occurs. In a normal mode, the protrusion group 20a is removed from the region over and under the disk, so that no cleaning effects occur. This embodiment is structured so that a user can selectively obtain a cleaning effect made by the protrusion group 20a as desired. Meanwhile, the protrusion group can adopt a structure in which several protrusion parts are arranged in the radial direction of the disk 13 in a stepped manner as shown in Figure 13B. The protrusion group 20a or 20b of Figures 13A or 13B can be disposed at a plurality of positions at an equiangular interval in the direction of rotation of the disk 13.

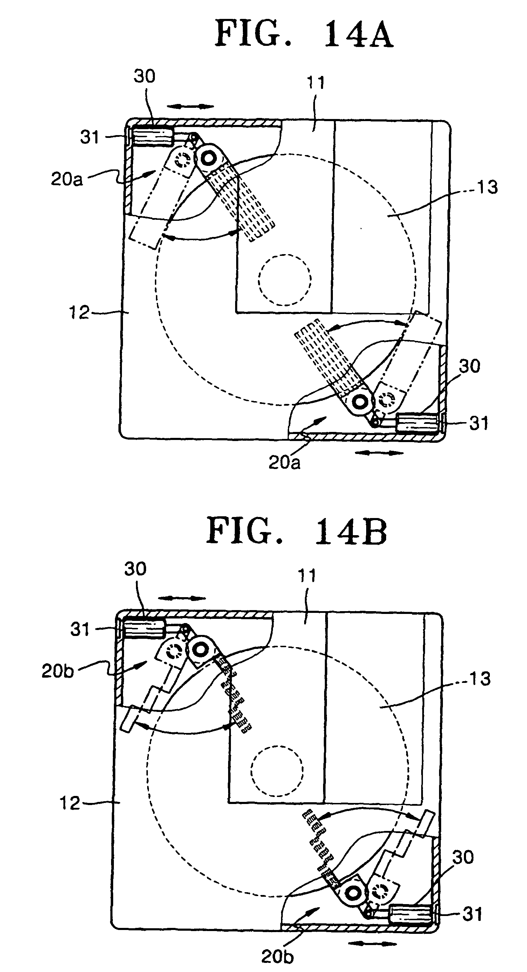

Figure 14A is a plan view of a disk cartridge according to a third embodiment of the present invention. The third embodiment is almost the same as the second embodiment, except that the protrusion group 20a is not rotated by the manual manipulation of a user but by an automatic driving apparatus such as a solenoid 30. Thus, the protrusion group 20a can be rotated to desired positions by the driving of the solenoid 30. Reference numeral 31 denotes a power and signal connection terminal connected to the solenoid 30. The power and signal connection terminal 31 is connected to a corresponding terminal (not shown) formed in a recording/reproducing apparatus when a disk cartridge is inserted into the recording/reproducing apparatus, so that it is provided with power supply and a signal. The protrusion group can adopt a shape in which protrusion groups 20b are arranged in a stepped manner in the radial direction of the disk 13 as shown in Figure 14B. Protrusion group 20a or 20b shown in Figures 4A or 4B can be disposed at a plurality of places at an equiangular interval in the direction of rotation of the disk 13.

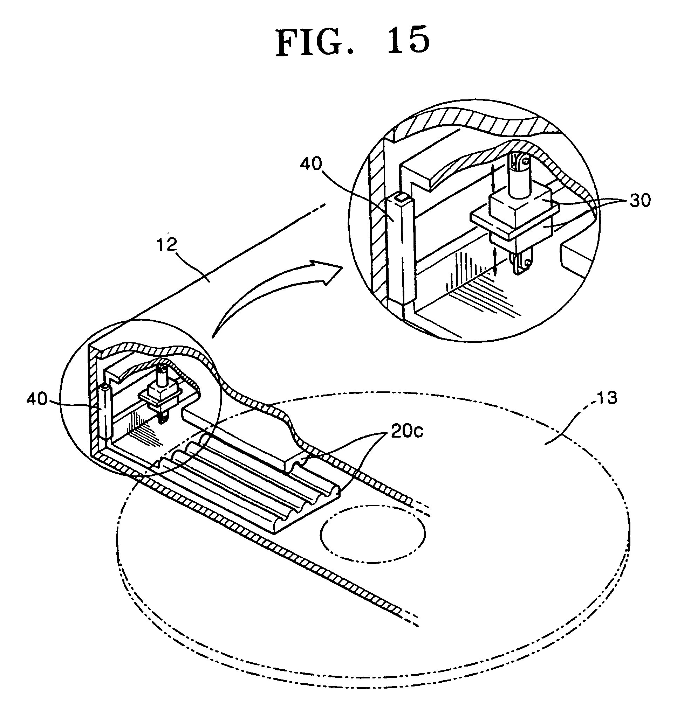

Figure 15 is a perspective view of a disk cartridge according to a fourth embodiment of the present invention. While the disk cartridges according to the second and third embodiments rotate their corresponding protrusion groups, the disk cartridge according to the fourth embodiment elevates a protrusion group 20c over the disk 13. That is, the protrusion group 20c is installed so that it ascends and descends along a guide rail 40, and approaches or departs the disk 13 by a driving apparatus such as a solenoid 30. Thus, in a cleaning mode, the protrusion group 20c generates a cleaning effect by approaching the disk 13. In a normal mode, the protrusion group 20c is isolated from the disk 13 to prevent variations in flow velocity and pressure from being caused by the protrusions. The protrusion group 20c can adopt a structure in which several protrusion groups are arranged in the radial direction of the disk 13 in a stepped manner as shown in Figure 14B. The protrusion group 20c can be disposed at a plurality of positions at an equiangular interval in the direction of rotation of the disk 13.

Therefore, a disk cartridge according to the present invention can be modified into various shapes as the aforementioned embodiments.

The removal of foreign materials using the protrusion group is not applied to only a disk cartridge. That is, in case of disks that are not housed in cartridges, the protrusion group is installed in the housing of a recording/reproducing apparatus including a turntable on which a disk is seated. That is, since the housing is the same as the disk cartridge in that it surrounds a disk, if the housing also has various shapes of protrusion groups protruding toward the disk as described above, forces generated by the flow of air and a pressure variation are exerted on the surface of the disk, like when a disk rotates within a cartridge.

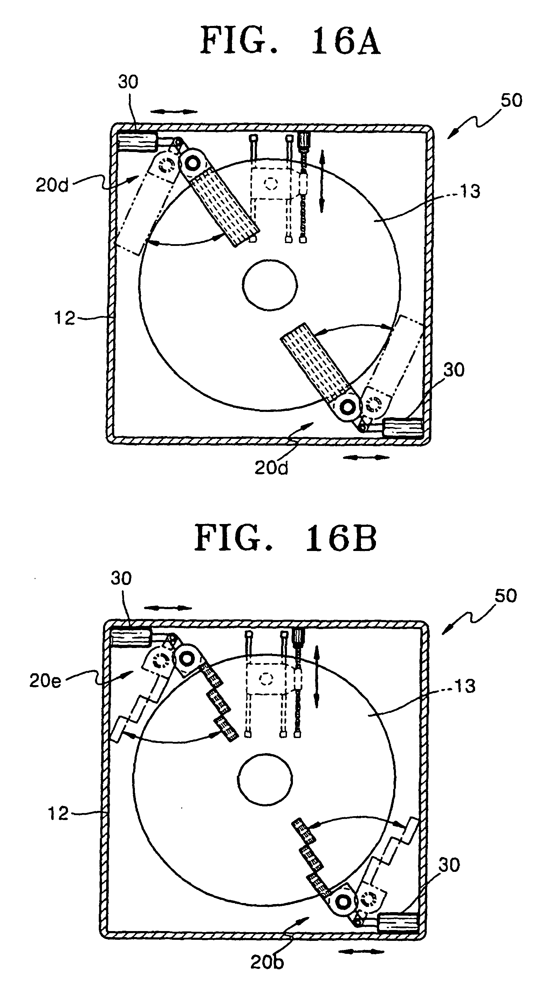

Figure 16A is a plan view of a disk recording/reproducing apparatus according to a first embodiment of the present invention adopting a protrusion group. This embodiment is similar to the above-described third embodiment of a disk cartridge. In the disk recording/reproducing apparatus according the first embodiment, a protrusion group 20d is rotatably installed within a housing 50 and rotated by a driving apparatus such as a solenoid 30. In a cleaning mode, the protrusion group 20a is rotated and located over and under the disk 13, such that a cleaning effect is generated by the flow of air caused during the rotation of the disk 13. In a normal mode, the protrusion group 20d gets out of the region over and under the disk 13 so that it does not affect the surface of the disk 13. The protrusion group can adopt a structure in which several protrusion groups 20e are arranged in the radial direction of the disk 13 in a stepped manner as shown in Figure 16B. The protrusion group 20d or 20e of Figures 16A or 16B can be disposed at a plurality of positions at an equiangular interval in the direction of rotation of the disk 13.

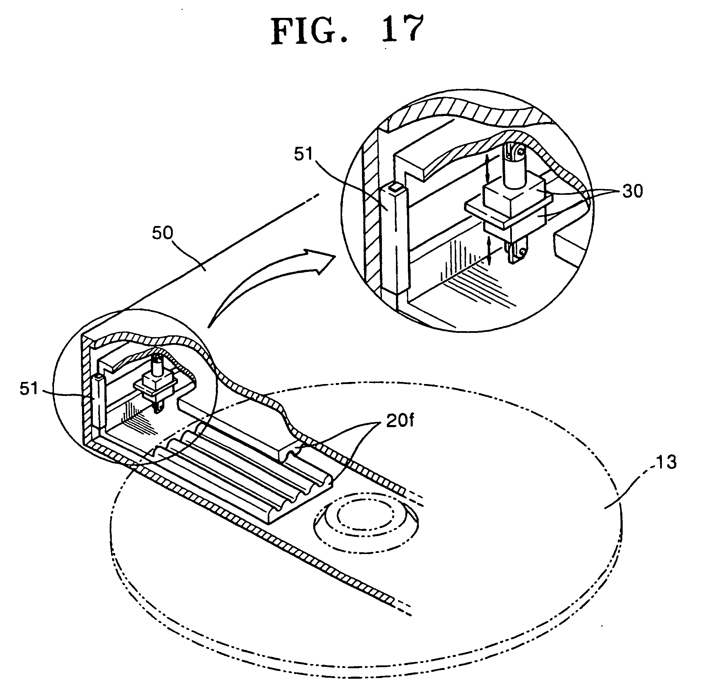

Figure 17 is a perspective view of a disk recording/reproducing apparatus according to a second embodiment of the present invention. The second embodiment is similar to the above-described forth embodiment of a disk cartridge. In the disk recording/reproducing apparatus according to the second embodiment, a protrusion group 20f is installed within a housing 50 so that it ascends and descends along a guide rail 51, and approaches or departs the disk 13 by a driving apparatus such as a solenoid 30. Thus, in a cleaning mode, the protrusion group 20f generates a cleaning effect by approaching the disk 13. In a normal mode, the protrusion group 20f is isolated from the disk 13 to prevent variations in flow velocity and pressure from being caused by the protrusions. The protrusion group 20f can adopt a structure in which several protrusion groups are arranged in the radial direction of the disk 13 in a stepped manner as shown in Figure 16B. The protrusion group 20f can be disposed at a plurality of positions at an equiangular interval in the direction of rotation of the disk 13.

As described above, various types of protrusion groups in the disk cartridges according to the above-described embodiments can be equally used within the housing 50, so that foreign materials can be removed from the surface of the disk 13 using the flow of air.

Consequently, when a protrusion group protruding toward a disk is formed on the inner wall of a case, which surrounds the disk, such as a disk cartridge or a housing, forces due to the flow of air and a variation in pressure caused during the rotation of a disk are exerted on the surface of the disk, thereby removing foreign materials such as dust from the surface of the disk.

As described above, in a disk cartridge and a disk recording/reproducing apparatus according to the present invention, a protrusion group is formed within the cartridge or the housing of the disk recording/reproducing apparatus so as to face the disk, such that forces generated by the flow of air and a pressure variation are exerted on the surface of the disk during the rotation of the disk. Therefore, foreign materials can be effectively removed from the surface of the disk without a separate cleaning apparatus.

Although a few preferred embodiments have been shown and described, it will be appreciated by those skilled in the art that various changes and modifications might be made without departing from the scope of the invention, as defined in the appended claims.

## Claims

1. A disk cartridge (10) including a case (12) for housing an information recording/reproducing disk (13) and a shutter (11) which is installed within the case (12) and selectively opened and closed to accomplish an access of the disk (13) to a recording/reproducing apparatus,
**characterised in that** the cartridge (10) is provided with a plurality of protrusion groups (20), each protrusion group (20) having a plurality of protrusions (21), each protrusion (21) protruding toward the disk (13).

2. The disk cartridge of claim 2, wherein the protrusion group (20) is formed on an inner wall of at least one of the case (12) and the shutter (11).

3. The disk cartridge of claim 1 or 2, wherein the protrusion group (20) has a structure in which the plurality of protrusions (21) repeat at a predetermined interval in a predetermined pattern.

4. The disk cartridge of claim 1, 2 or 3, wherein each of the protrusions is arranged to lie in a radial direction of the disk (13).

5. The disk cartridge of claim 1, 2, 3 or 4, wherein the protrusion group (20) is disposed at a plurality of places at an equiangular interval in the direction of the rotation of the disk.

6. The disk cartridge of claim 1, wherein the protrusion group has a structure in which protrusion groups (21) are arranged in a stepped manner in the radial direction of the disk.

7. The disk cartridge of claim 1, wherein the protrusion group is rotatably located within the case so that the protrusions are located over and under the disk or removed from the region over and under the disk.

8. The disk cartridge of claim 7, further comprising a driving apparatus (30) for rotating the protrusion group.

9. The disk cartridge of claim 7 or 8, wherein the protrusion group (20) has a structure in which the plurality of protrusions (21) repeat at a predetermined interval in a predetermined pattern.

10. The disk cartridge of claim 7, 8 or 9, wherein each of the protrusions (21) lie in the radial direction of the disk.

11. The disk cartridge of claim 7, 8, 9 or 10, wherein the protrusion group (20) is disposed at a plurality of places at an equiangular interval in the direction of the rotation of the disk.

12. The disk cartridge of claim 7, 8, 9, 10 or 11, wherein the protrusion group (20) has a structure in which protrusion groups are arranged in a stepped manner in the radial direction of the disk.

13. The disk cartridge of claim 1, wherein the protrusion group is formed within the case so as to ascend or descend, such that the protrusions approach to the disk or are isolated from the disk.

14. The disk cartridge of claim 13, further comprising a driving apparatus (30) for elevating the protrusion group.

15. The disk cartridge of claim 13 or 14, wherein the protrusion group (20) has a structure in which the plurality of protrusions (21) repeat at a predetermined interval in a predetermined pattern.

16. The disk cartridge of claim 13, 14 or 15, wherein each of the protrusions (21) lies in the radial direction of the disk.

17. The disk cartridge of claim 13, 14, 15 or 16, wherein the protrusion group (20) is disposed at a plurality of places at an equiangular interval in the direction of the rotation of the disk.

18. The disk cartridge of claim 13, 14, 15, 16 or 17 wherein the protrusion group (20) has a structure in which protrusion groups (20) are arranged in a stepped manner in the radial direction of the disk.

19. A disk recording/reproducing apparatus for recording information on or reproducing information from a disk (13) while rotating the disk loaded within a disk cartridge (12) according to any of claims 7-12.

20. A disk recording/reproducing apparatus for recording information on or reproducing information from a disk (13) while rotating the disk loaded within a disk cartridge (12) according to any of claims 13-18.

21. A cleaning apparatus for use with a rotatable information recording disk (13), **characterised in that** the apparatus is provided with a plurality of protrusion groups (20), each protrusion group (20) having a plurality of protrusions (21), each protrusion (21) protruding toward the disk (13).

22. The cleaning apparatus of claim 21, wherein the protrusion group (20) is fixedly mounted in relation to the rotatable disk (13).

23. The cleaning apparatus of claim 22, wherein the protrusion group (20) is formed on an inner wall of a case (12) or a shutter (11) of a disk cartridge (10).

24. The cleaning apparatus of claim 21, wherein the protrusion group (20) is moveably mounted with respect to the rotatable disk (13).

25. The cleaning apparatus of claim 24, wherein the protrusion group (20) is rotatable toward or away from the disk (13).

26. The cleaning apparatus of claim 24, wherein the protrusion group (20) ascends or descends toward or away from the disk (13).

## Patentansprüche

1. Plattenkassette (10) einschließlich eines Gehäuses (12) zum Unterbringen einer Informations-Aufzeichnungs-/Wiedergabeplatte (13) und eines Verschlusses (11), der in dem Gehäuse (12) installiert ist und wahlweise geöffnet und geschlossen wird, um einen Zugriff auf die Platte (13) durch eine Aufzeichnungs-/Wiedergabevorrichtung zu gestatten,
**dadurch gekennzeichnet, dass** die Kassette (10) mit einer Vielzahl von Vorsprungsgruppen (20) versehen ist, wobei jede Vorsprungsgruppe (20) eine Vielzahl von Vorsprüngen (21) aufweist, wobei jeder Vorsprung (21) zu der Platte (13) hin vorsteht.

2. Plattenkassette nach Anspruch 2, **dadurch gekennzeichnet, dass** die Vorsprungsgruppe (20) auf einer Innenwand des Gehäuses (12) und/oder des Verschlusses (11) ausgebildet ist.

3. Plattenkassette nach Anspruch 1 oder 2, **dadurch gekennzeichnet dass** die Vorsprungsgruppe (20) einen Aufbau aufweist, bei dem sich die Vielzahl von Vorsprüngen (21) mit einem vorbestimmten Intervall und mit einem vorbestimmten Muster wiederholen.

4. Plattenkassette nach Anspruch 1, 2 oder 3, **dadurch gekennzeichnet, dass** jeder der Vorsprünge in einer Radialrichtung der Platte (13) angeordnet ist.

5. Plattenkassette nach Anspruch 1, 2, 3 oder 4, **dadurch gekennzeichnet, dass** die Vorsprungsgruppe (20) an einer Vielzahl von Positionen mit gleichmäßigen Winkelintervallen in der Drehrichtung angeordnet ist.

6. Plattenkassette nach Anspruch 1, **dadurch gekennzeichnet, dass** die Vorsprungsgruppe einen Aufbau aufweist, bei dem Vorsprungsgruppen (21) in der Radialrichtung der Platte gestuft angeordnet sind.

7. Plattenkassette nach Anspruch 1, **dadurch gekennzeichnet**, das die Vorsprungsgruppe einen Aufbau aufweist, der drehbar in dem Gehäuse angeordnet ist, sodass die Vorsprünge oberhalb und unterhalb der Platte positioniert werden oder aus dem Bereich oberhalb und unterhalb der Platte entfernt werden können.

8. Plattenkassette nach Anspruch 7, weiterhin **gekennzeichnet durch** eine Antriebseinrichtung (30) zum Drehen der Vorsprungsgruppe.

9. Plattenkassette nach Anspruch 7 oder 8, **dadurch gekennzeichnet, dass** die Vorsprungsgruppe (20) einen Aufbau aufweist, bei dem sich die Vielzahl von Vorsprüngen (21) mit einem vorbestimmten Intervall in einem vorbestimmten Muster wiederholen.

10. Plattenkassette nach Anspruch 7, 8 oder 9, **dadurch gekennzeichnet, dass** jeder der Vorsprünge (21) in der Radialrichtung der Platte angeordnet ist.

11. Plattenkassette nach Anspruch 7, 8, 9 oder 10, **dadurch gekennzeichnet, dass** die Vorsprungsgruppe (20) an einer Vielzahl von Positionen mit gleichmäßigen Winkelintervallen in der Drehrichtung der Platte angeordnet ist.

12. Plattenkassette nach Anspruch 7, 8, 9, 10 oder 11, **dadurch gekennzeichnet, dass** die Vorsprungsgruppe (20) einen Aufbau aufweist, bei dem die Vorsprungsgruppen gestuft in der Radialrichtung der Platte angeordnet sind.

13. Plattenkassette nach Anspruch 1, **dadurch gekennzeichnet, dass** die Vorsprungsgruppe in dem Gehäuse angeordnet ist, um sich zu heben und senken, damit sich die Vorsprünge der Platte nähern oder von derselben entfernen.

14. Plattenkassette nach Anspruch 13, weiterhin **gekennzeichnet durch** eine Antriebsvorrichtung (30) zum Heben der Vorsprungsgruppe.

15. Plattenkassette nach Anspruch 13 oder 14, **dadurch gekennzeichnet, dass** die Vorsprungsgruppe (20) einen Aufbau aufweist, bei dem sich die Vielzahl von Vorsprüngen (21) mit einem vorbestimmten Winkelintervall in einem vorbestimmten Muster wiederholen.

16. Plattenkassette nach Anspruch 13, 14 oder 15, **dadurch gekennzeichnet, dass** jeder der Vorsprünge (21) in der Radialrichtung der Platte liegt.

17. Plattenkassette nach Anspruch 13, 14, 15 oder 16, **dadurch gekennzeichnet, dass** die Vorsprungsgruppe (20) an einer Vielzahl von Positionen mit gleichen Winkelintervallen in der Drehrichtung der Platte angeordnet ist.

18. Plattenkassette nach Anspruch 13, 14, 15, 16 oder 17, **dadurch gekennzeichnet, dass** die Vorsprungsgruppe (20) einen Aufbau aufweist, bei dem Vorsprungsgruppen (20) gestuft in der Radialrichtung der Platte angeordnet sind.

19. Platten-Aufzeichnungs-/Wiedergabevorrichtung zum Aufzeichnen von Informationen auf oder zum Wiedergeben von Informationen von einer Platte (13), während die in einer Plattenkassette (12) gemäß einem der Ansprüche 7-12 geladene Platte gedreht wird.

20. Platten-Aufzeichnungs-/Wiedergabevorrichtung zum Aufzeichnen von Informationen auf oder zum Wiedergeben von Informationen von einer Platte (13), während die in einer Plattenkassette (12) gemäß einem der Ansprüche 13-18 geladene Platte gedreht wird.

21. Reinigungsvorrichtung für die Verwendung mit einer drehbaren Informationsaufzeichnungsplatte (13), **dadurch gekennzeichnet, dass** die Vorrichtung eine Vielzahl von Vorsprungsgruppen (20) umfasst, wobei jede Vorsprungsgruppe (20) eine Vielzahl von Vorsprüngen (21) umfasst, wobei jeder Vorsprung (21) zu der Platte vorsteht.

22. Reinigungsvorrichtung nach Anspruch 21, **dadurch gekennzeichnet, dass** die Vorsprungsgruppe (20) fix in Bezug auf die drehbare Platte (13) montiert ist.

23. Reinigungsvorrichtung nach Anspruch 22, **dadurch gekennzeichnet, dass** die Vorsprungsgruppe (20) auf einer Innenwand eines Gehäuses (12) oder eines Verschlusses (11) einer Plattenkassette (10) ausgebildet ist.

24. Reinigungsvorrichtung nach Anspruch 21, **dadurch gekennzeichnet, dass** die Vorsprungsgruppe (20) beweglich in Bezug auf die drehbare Platte (13) montiert ist.

25. Reinigungsvorrichtung nach Anspruch 24, **dadurch gekennzeichnet, dass** die Vorsprungsgruppe (20) zu der Platte (13) hin oder von derselben weg gedreht wird.

26. Reinigungsvorrichtung nach Anspruch 24, **dadurch gekennzeichnet, dass** die Vorsprungsgruppe (20) zu oder von der Platte (13) gehoben oder gesenkt wird.

## Revendications

1. Cartouche de disque (10) incluant un boîtier (12) pour loger un disque d'enregistrement/lecture d'informations (13) et un obturateur (11) qui est installé dans le boîtier (12) et sélectivement ouvert et fermé pour accomplir un accès du disque (13) à un dispositif d'enregistrement/lecture,
**caractérisée en ce que** la cartouche (10) est munie d'une pluralité de groupes de saillies (20), chaque groupe de saillies (20) ayant une pluralité de saillies (21), chaque saillie (21) faisant saillie en direction du disque (13).

2. Cartouche de disque selon la revendication 1, dans laquelle le groupe de saillies (20) est formé sur une paroi intérieure d'au moins l'un du boîtier (12) et de l'obturateur (11).

3. Cartouche de disque selon la revendication 1 ou 2, dans laquelle le groupe de saillies (20) a une structure dans laquelle la pluralité de saillies (21) se répète à un intervalle prédéterminé suivant un motif prédéterminé.

4. Cartouche de disque selon la revendication 1, 2 ou 3, dans laquelle chacune des saillies est agencée pour se trouver dans une direction radiale du disque (13).

5. Cartouche de disque selon la revendication 1, 2, 3 ou 4, dans laquelle le groupe de saillies (20) est disposé dans une pluralité d'emplacements à un intervalle équiangulaire dans la direction de la rotation du disque.

6. Cartouche de disque selon la revendication 1, dans laquelle le groupe de saillies a une structure dans laquelle des groupes de saillies (21) sont agencés d'une manière échelonnée dans la direction radiale du disque.

7. Cartouche de disque selon la revendication 1, dans laquelle le groupe de saillies est placé d'une manière rotative dans le boîtier de sorte que les saillies sont placées sur et sous le disque ou retirées de la région sur ou sous le disque.

8. Cartouche de disque selon la revendication 7, comportant de plus un dispositif d'entraînement (30) pour entraîner en rotation le groupe de saillies.

9. Cartouche de disque selon la revendication 7 ou 8, dans laquelle le groupe de saillies (20) a une structure dans laquelle la pluralité de saillies (21) se répète à un intervalle prédéterminé suivant un motif prédéterminé.

10. Cartouche de disque selon la revendication 7, 8 ou 9, dans laquelle chacune des saillies (21) se trouve dans la direction radiale du disque.

11. Cartouche de disque selon la revendication 7, 8, 9 ou 10, dans laquelle le groupe de saillies (20) est disposé dans une pluralité d'emplacements à un intervalle équiangulaire dans la direction de la rotation du disque.

12. Cartouche de disque selon la revendication 7, 8, 9, 10 ou 11, dans laquelle le groupe de saillies (20) a une structure dans laquelle des groupes de saillies sont agencés d'une manière échelonnée dans la direction radiale du disque.

13. Cartouche de disque selon la revendication 1, dans laquelle le groupe de saillies est formé dans le boîtier de manière à monter ou descendre, de sorte que les saillies se rapprochent du disque ou sont écartées du disque.

14. Cartouche de disque selon la revendication 13, comportant de plus un dispositif d'entraînement (30) pour élever le groupe de saillies.

15. Cartouche de disque selon la revendication 13 ou 14, dans laquelle le groupe de saillies (20) a une structure dans laquelle la pluralité de saillies (21) se répète à un intervalle prédéterminé suivant un motif prédéterminé.

16. Cartouche de disque selon la revendication 13, 14 ou 15, dans laquelle chacune des saillies (21) se trouve dans la direction radiale du disque.

17. Cartouche de disque selon la revendication 13, 14, 15 ou 16, dans laquelle le groupe de saillies (20) est disposé dans une pluralité d'emplacements à un intervalle équiangulaire dans la direction de la rotation du disque.

18. Cartouche de disque selon la revendication 13, 14, 15, 16 ou 17, dans laquelle le groupe de saillies (20) a une structure dans laquelle des groupes de saillies (20) sont agencés d'une manière échelonnée dans la direction radiale du disque.

19. Dispositif d'enregistrement/lecture de disque pour enregistrer des informations sur un disque (13) ou lire des informations à partir de celui-ci pendant la rotation du disque inséré dans une cartouche de disque (12) selon l'une quelconque des revendications 7 à 12.

20. Dispositif d'enregistrement/lecture de disque pour enregistrer des informations sur un disque (13) ou lire des informations à partir de celui-ci pendant la rotation du disque inséré dans une cartouche de disque (12) selon l'une quelconque des revendications 13 à 18.

21. Dispositif de nettoyage à utiliser avec un disque d'enregistrement d'informations rotatif (13), **caractérisé en ce que** le dispositif est muni d'une pluralité de groupes de saillies (20), chaque groupe de saillies (20) ayant une pluralité de saillies (21), chaque saillie (21) faisant saillie dans la direction du disque (13).

22. Dispositif de nettoyage selon la revendication 21, dans lequel le groupe de saillies (20) est monté d'une manière fixe par rapport au disque orientable (13).

23. Dispositif de nettoyage selon la revendication 22, dans lequel le groupe de saillies (20) est formé sur une paroi intérieure d'un boîtier (12) ou d'un obturateur (11) d'une cartouche de disque (10).

24. Dispositif de nettoyage selon la revendication 21, dans lequel le groupe de saillies (20) est monté d'une manière mobile par rapport au disque orientable (13).

25. Dispositif de nettoyage selon la revendication 24, dans lequel le groupe de saillies (20) est orientable vers le disque (13) ou loin de celui-ci.

26. Dispositif de nettoyage selon la revendication 24, dans lequel le groupe de saillies (20) monte ou descend vers le disque (13) ou à l'écart de celui-ci.
